# EUROPEAN PATENT SPECIFICATION

(11) **EP 4 711 266 B1**
(45) Date of publication and mention of the grant of the patent: **07.10.2026**
(21) Application number: 25183029.5
(22) Date of filing: 16.06.2025
(51) Int. Cl.: B64C 1/06, B64C 1/40, B64D 11/00

(54) **A SPACER TO COVER A GAP BETWEEN A SIDEWALL AND A MONUMENT WALL, AND AN AIRCRAFT HAVING SUCH SPACER**
ABSTANDSHALTER ZUM ABDECKEN EINES SPALTS ZWISCHEN EINER SEITENWAND UND EINER MONUMENTWAND UND FLUGZEUG MIT SOLCH EINEM ABSTANDSHALTER
ESPACEUR POUR COUVRIR UN ESPACE ENTRE UNE PAROI LATÉRALE ET UNE PAROI DE MONUMENT, ET AÉRONEF COMPORTANT UN TEL ESPACEUR

(30) Priority: 11.09.2024 DE 102024126119
(43) Date of publication of application: 18.03.2026
(73) Proprietor: AIRBUS Operations GmbH, 21129 Hamburg (DE); Airbus Operations SAS, 31060 Toulouse (FR)
(72) Inventor: Kircher, Benedikt, 21129 Hamburg (DE); Konecny, Michael, 21129 Hamburg (DE); Marchand, Nicolas, 31060 Toulouse (FR)
(74) Representative: Schornack, Oliver

(56) References cited:
- CA-A1- 2 946 818
- DE-B4- 102020 000 947
- US-A- 3 300 913
- US-A1- 2008 282 636
- US-A1- 2017 058 561
- US-B2- 7 478 781

## Description

The present disclosure generally relates to a spacer covering a gap between a sidewall and a monument wall in an aircraft, and a corresponding aircraft. Particularly, the present disclosure relates to a spacer that can be mounted to the monument, and an aircraft having a monument, a sidewall and a spacer covering a gap therebetween.

A conventional transition between a sidewall and a monument wall in an aircraft is made by cutting the sidewall or the monument wall to have a small gap between both walls and filling such gap with an elastic filler, such as a rubber band. Usually a sidewall covers the interior of a fuselage of the aircraft, such as frames and stringers of the fuselage. A sidewall covers one or more frames, and a plurality of sidewalls are installed along the longitudinal direction (flight direction) of the fuselage of the aircraft. The sidewalls are often installed before interior components of the aircraft are brought into the fuselage. Thus, when a monument is installed in an aircraft interior space (i.e., an aircraft cabin) the fuselage is mainly covered by sidewalls irrespective of the installation space of the monument. The monument regularly has one or more monument walls arranged substantially along a transverse direction of the fuselage, i.e. substantially perpendicular to the longitudinal direction and hence substantially perpendicular to the sidewall.

Therefore, the outer end of the monument wall and/or a sidewall is to be cut, so that both walls have matching or corresponding edges. The small space between these concerted edges is then filled with an elastic filler. In case of a monument extending in the longitudinal direction of the aircraft, at least two monument walls and associated sidewalls have to be adapted to one another.

However, such monument installation and adaptation to the sidewall is cumbersome and time-consuming. US 2008/282636A1, US 7478781B2, DE 102020000947B4 are documents according to the prior art.

It is therefore an object of the present disclosure to render installation of monuments adjacent to a sidewall easier.

This object is solved by the present invention as defined in the independent claims.

Preferred embodiments are defined by the dependent claims.

According to a first aspect to better understand the present disclosure, a spacer for covering a gap between a sidewall arranged in a longitudinal direction and a monument wall arranged in a transverse direction in an aircraft comprises an upper mount, and a lower mount. A sidewall is configured to cover the fuselage of an aircraft, so that it can have the shape of a portion of a cylinder corresponding to the shape of the interior side of the fuselage. A monument can be a galley, lavatory, a cabinet, a separating wall or the like and includes at least one monument wall arranged in the transverse direction of the aircraft. The transverse direction is substantially perpendicular to the longitudinal direction of the aircraft. Thus, the monument wall is arranged substantially perpendicular to the sidewall. It is to be understood that "substantially perpendicular" includes an arrangement of the monument wall in a range of 90° +/- 20° with respect to the sidewall, e.g., with respect to the longitudinal direction of the aircraft.

The lower mount comprises a monument-fixated holder, a spacer-fixated holder, and coupling means configured to couple the monument-fixated holder and the spacer-fixated holder. The coupling means are further configured to restrict a relative movement between the monument-fixated holder and the spacer-fixated holder in the longitudinal direction, and to allow a relative movement in the transverse direction.

The provision of the monument-fixated holder allows installing the spacer together with the monument. Particularly, the monument-fixated holder can be mounted or fixed to the monument wall. By restricting a relative movement between the monument-fixated holder and the spacer-fixated holder in the longitudinal direction ensures that a gap between the spacer and the monument wall remains the same irrespective of any movement of the spacer and the monument. As a mere example, during flight (or other movement of the aircraft) the fuselage and the monument may experience a relative movement with respect to one another, for example, due to bending of the fuselage, a cabin floor (on which the monument is mounted) or other dynamic actions of the aircraft.

In conventional filler solutions, such relative movement may act on the filler resulting in the filler being detached from the monument wall and/or the sidewall (edge).

In the present disclosure, the spacer is fixed relative to the monument. The spacer can be arranged to either cover the sidewall or be flush with the sidewall, so that any relative movement between the spacer and the sidewall is not visible or does not result in open gaps as it may be the case in conventional filler solutions.

In addition, providing the monument-fixated holder allows preparation of the monument wall including such holder(s), installing the monument in the aircraft interior, and then simply mount the spacer to the monument. An adaptation of the sidewall can be omitted, or the sidewall can simply be cut irrespective of the form of the monument, wherein the resulting (larger) gap can be covered by the spacer. Thus, the installation time and costs can be significantly reduced.

It is to be understood that monument wall and sidewall can be interchanged by other walls in an aircraft arranged substantially perpendicular to one another. Thus, a spacer as disclosed herein can likewise be provided to cover a gap between two substantially perpendicularly arranged walls in an aircraft. As a mere example, such a gap may also be present between an overhead luggage compartment and any surrounding wall or even ceiling panel. Likewise, linings and panels in an entrance area of an aircraft are often installed in a substantially perpendicular manner, where a corresponding a gap can be closed by the disclosed spacer. Therefore, "monument" and "sidewall" are not to be understood as limiting the present disclosure to walls of particular interior components of the aircraft.

In a variant, the size of the spacer in the longitudinal direction can be larger than that of a conventional filler. As a mere example, a spacer can have a size in the longitudinal direction of more than 3 cm, more than 5 cm, more than 10 cm, more than 20 cm, or even more than 50 cm. The size of the spacer in the longitudinal direction is not restricted by these examples, but may be set by the side edge of the adjacent sidewall (at a longitudinal end of the sidewall) or by a cutting-edge of the sidewall optimised for the sidewall installation (e.g., close to sidewall mounts) and not optimised for the monument.

In a variant, the monument-fixated holder can comprise a groove, wherein the coupling means comprise a sliding block configured to be inserted into and slide along the groove. The groove can be arranged along the transverse direction or in a transverse plane, so that the sliding block is restricted or hindered from a relative movement with respect to the monument wall. When the sliding block slides along the groove, the spacer-fixated holder can perform a relative movement to the monument wall (actually relative to the monument-fixated holder having the groove). Thus, a relative movement between the monument and the sidewall can be (at least partially) compensated by a movement of the spacer relative to the monument.

In a variant, at least the groove can form a circular arc having a centre at the upper mount. For instance, the groove can be formed along a circular arc in the monument-fixated holder, or the monument-fixated holder has a shape according to the circular arc. In any case, such form of the groove allows the sliding block to perform a circular movement around the upper mount. Thus, the spacer can swing or oscillate around the upper mount, which facilitates compensation of a relative movement between monument and fuselage (sidewall) while maintaining a constant distance between spacer and monument, which improves visual appearance of the transition from monument to sidewall.

In a variant, the groove can comprise an end stop at each end of the groove which end is configured to stop a movement of the sliding block along the groove. Thus, the sliding block can be prevented from disengaging the groove, and the spacer can be securely mounted to the monument.

In a variant, the coupling means can comprise a first damper configured to absorb vibrations of the spacer in the longitudinal direction. Thus, a relative movement between sidewall and monument and/or spacer and monument can be partially compensated by the damper. It is to be understood that the damping shall not allow a movement of the spacer in the longitudinal direction relative to the monument wall to such an extent that the spacer touches the monument wall. In other words, the coupling means of the lower mount shall restrict a relative movement in the longitudinal direction between the spacer and the monument wall, while the first damper shall only lead to a very small amount of such relative movement.

As a mere example, the first damper may be configured to allow a movement of the spacer relative to the monument wall in the longitudinal direction of less than 20%, less than 10%, less than 5%, or even less than 2% of the distance of an edge of the spacer to the monument wall. This particularly applies for regular or normal flight situations. It is to be understood that in case of intense load changes, for example, high-intensity vibrations in the aircraft, such as during landing, turbulences or other high g-load situations a movement between the edge of the spacer and the monument wall may be larger than 20%, up to 80% or even up to 100% of the distance between edge of the spacer and monument wall, as dampening such high loads may not be possible.

In a variant, the coupling means can comprise a second damper configured to absorb vibrations of the spacer in the transverse direction. Thus, while the coupling means of the lower mount allow a certain freedom of a movement of the spacer in the transverse direction in the region of the lower mount, the second damper shall reduce vibrations, i.e., swinging or oscillating of the spacer in the transverse direction. This reduces noise generated by the spacer.

In another variant, the coupling means can comprise a damping component configured to absorb vibrations of the spacer in the longitudinal direction and the transverse direction. In other words, the above-describe first and second damper are integrated into the single damping component.

As a mere example, the damping component can be an elastic component. For instance, the damping component can be made from an elastic material, such as an elastomer (or rubber), and can have a shape facilitating damping in the longitudinal direction and the transverse direction.

In yet another variant, the coupling means can comprise a third damper or integrated damping component configured to absorb vibrations of the spacer in a direction perpendicular to the longitudinal direction and perpendicular to the transverse direction. As a mere example, the third damper or integrated damping component can be configured to absorb vibrations of the spacer in a substantially vertical direction.

In a variant, the lower mount can further comprise a plurality of fixations spaced apart in the transverse direction, an adjustment plate configured to be mounted to one or a subset of the plurality of fixations, and a biasing element coupled to a fixation of the coupling means. These components of the lower mount form a security measure. For instance, the biasing element can be arranged to bias in the transverse direction. Thus, the spacer can still perform a relative movement to the monument wall in the transverse direction, but is limited to a certain movement extend due to the increasing biasing force in either direction along the transverse direction.

As a mere example, since the spacer can face a passenger cabin of the aircraft, a passenger may fumble or fiddle with the spacer including pulling the spacer away from the sidewall, i.e. along the transverse direction. The biasing element (like the end stop of the groove) may limit such pulling on the spacer.

Furthermore, the plurality of fixations spaced apart in the transverse direction allow mounting the adjustment plate at different positions at the monument-fixated holder along the transverse direction. Thus, during installation of the spacer to the monument, the adjustment plate can be mounted to the monument-fixated holder at a location along the transverse direction in an optimal position of the spacer. The biasing element limits the movement of the spacer along the transverse direction relative to the monument wall.

In a variant, the monument-fixated holder can comprise a hook, the spacer-fixated holder can comprise a pyramidal component, and the coupling means can comprise a loop coupled to the pyramidal component and configured to be hooked into the hook. Thus, installation of the spacer to the monument can be achieved in an easy manner, which saves installation time and costs.

In a variant, the spacer can further comprise a gliding component arranged on a surface of the spacer facing a surface of the sidewall. Thus, the spacer can be configured to contact the sidewall via the gliding component, to achieve a flush transition from the spacer to the sidewall. The gliding component allows a relative movement between the sidewall and the monument-mounted spacer. As a mere example, the gliding component can include PTFE (Polytetrafluoroethylene) or the like. The gliding component can further be configured as a cushion damping any relative movement between the sidewall and the spacer in the transverse direction and closing any gap between the sidewall and the spacer due to manufacturing tolerances.

In a variant, the spacer can further comprise a side mount configured to be mounted to a frame bracket and hold the spacer at a position spaced apart from the monument wall. Particularly, in case of a larger spacer extending in the longitudinal direction, an additional mount may become necessary (in addition to the upper and lower mounts) to securely mount the spacer in the interior of the aircraft.

A frame bracket can be a bracket that is attached to a frame of the fuselage of the aircraft. Such frame bracket may be a conventional bracket for installation of a sidewall to the frame.

In a variant, the side mount can comprise a base plate configured to be mounted to the frame bracket, a first hook provided on the basis plate, and a second hook coupled to the spacer and configured to be hooked into the first hook. Such hook coupling can allow a relative movement of the spacer to the frame bracket in the longitudinal direction as well as in a vertical direction, but blocks or hinders a movement of the spacer in the transverse direction. Since the sidewall is regularly also mounted to the frame or the frame bracket, a relative movement between the spacer and the sidewall in the transverse direction is restricted.

According to a second aspect to better understand the present disclosure, an aircraft comprises a sidewall, a monument having a monument wall arranged substantially perpendicular to the sidewall, wherein a side edge of the sidewall is spaced apart from a surface of the monument wall facing the sidewall, and a spacer according to the first aspect or one or more of its variants. The spacer covers a gap between the monument wall and the side edge of the sidewall.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates an aircraft region including a spacer between a monument and a sidewall;
- Figure 2: schematically illustrates perspective views of an upper mount;
- Figure 3: schematically illustrates a sectional view of a spacer including mounts;
- Figure 4: schematically illustrates a sectional view of a spacer including other mounts;
- Figure 5: schematically illustrates a sectional view of a spacer including yet another mount;
- Figure 6: schematically illustrates a front view and a side view of the mount of Figure 5;
- Figure 7: illustrates a perspective view of a schematic structure forming a lower mount;
- Figure 8: schematically illustrates a cross-sectional view of the mount of Figure 7;
- Figure 9: schematically illustrates a view of a lower mount in a longitudinal direction;
- Figure 10: schematically illustrates a view of a lower amount in a transverse direction;
- Figure 11: schematically illustrates a front view of another lower mount;
- Figures 12 to 14: schematically illustrate different perspective views of yet another lower mount; and
- Figure 15: schematically illustrates an aircraft comprising a spacer between a monument and a sidewall.

In the following description, for purposes of explanation and not limitation, specific details are set forth in order to provide a thorough understanding of the present disclosure. It will be apparent to one skilled in the art that the present disclosure may be practiced in other implementations that depart from these specific details.

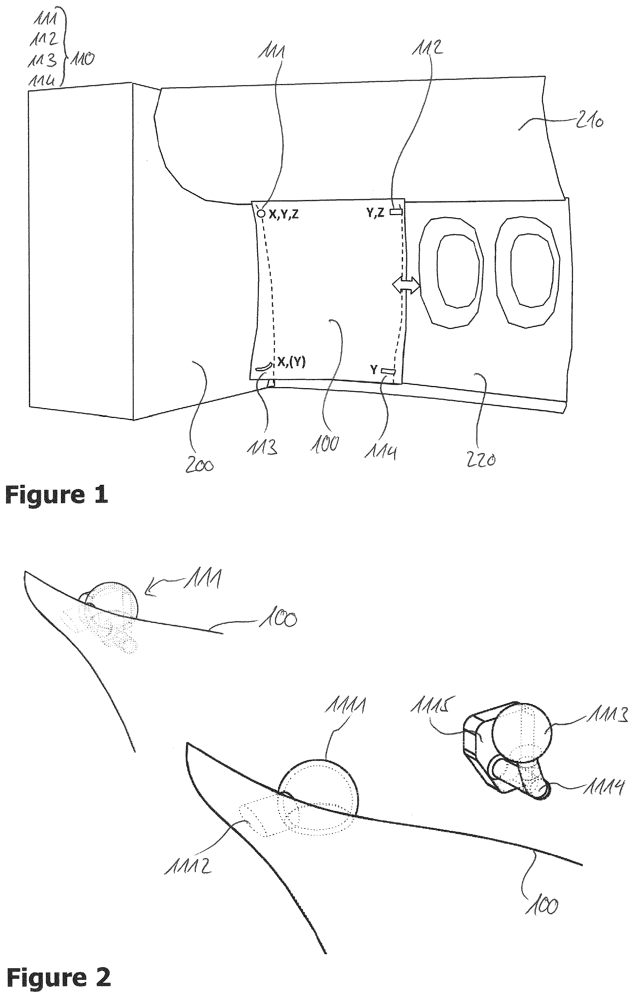

Figure 1 schematically illustrates an aircraft region including a spacer 100 between a monument 200 and a sidewall 220. The sidewall 220 is arranged along a longitudinal direction of the aircraft and covers the fuselage of the aircraft. For instance, the sidewall 220 may cover an area comprising two windows of the aircraft. Furthermore, a ceiling panel or overhead stowage compartment 210 can be arranged above the sidewall 220.

The spacer 100 is mounted in the aircraft region by two or more mounts 110. Figure 1 exemplarily illustrates four mounts 111 to 114 at respective corners of the spacer 100. For instance, the spacer 100 may be equipped with an upper mount 111 and a lower mount 113, which will be explained in the following.

It is to be noted that the spacer 100 in Figure 1 is quite a long in the longitudinal direction. Such large spacer 100 increases visibleness of the elements of the aircraft region in the drawing. On the other hand, a spacer 100 could actually have such size in the longitudinal direction, if a large gap is to be closed.

Figure 2 schematically illustrates perspective views of an upper mount 111. To the upper left in Figure 2 is the upper mount 111 when the spacer is installed in the aircraft region, while in the lower right in Figure 2 the upper mount 111 is detached. Specifically, the upper mount 111 can include a monument-fixated holder 1115 that is mounted to or integrated into the monument wall 200 (i.e., a wall of the monument) arranged substantially perpendicular to the sidewall 220. The upper mount 111 further includes a spacer-fixated holder 1112.

Coupling means are provided that couple the monument-fixated holder 1115 to the spacer-fixated holder 1112. For instance, on the spacer side can be a joint socket 1111, while on the monument side can be a joint ball 1113. The joint ball 1113 can be received in the joint socket 1111, by imposing the socket 1111 over the ball 1113.

The coupling means can further include a bar and/or damper 1114 connecting the joint ball 1113 to the monument-fixated holder 1115. On the one hand, this allows positioning the joint ball 1113 at the respective distance from the monument-fixated holder 1115, and, on the other hand, it allows dampening vibrations or similar relative movement between the spacer 100 and the monument wall 200.

Employing a socket and ball joint 1111, 1113 at the upper mount 111 provides several freedoms of movement for the spacer 100 relative to the monument 200. Nevertheless, a relative movement between spacer 100 and monument 200 is restricted in the longitudinal direction, the transverse direction as well as a vertical direction (the latter being perpendicular to the longitudinal and the transverse direction).

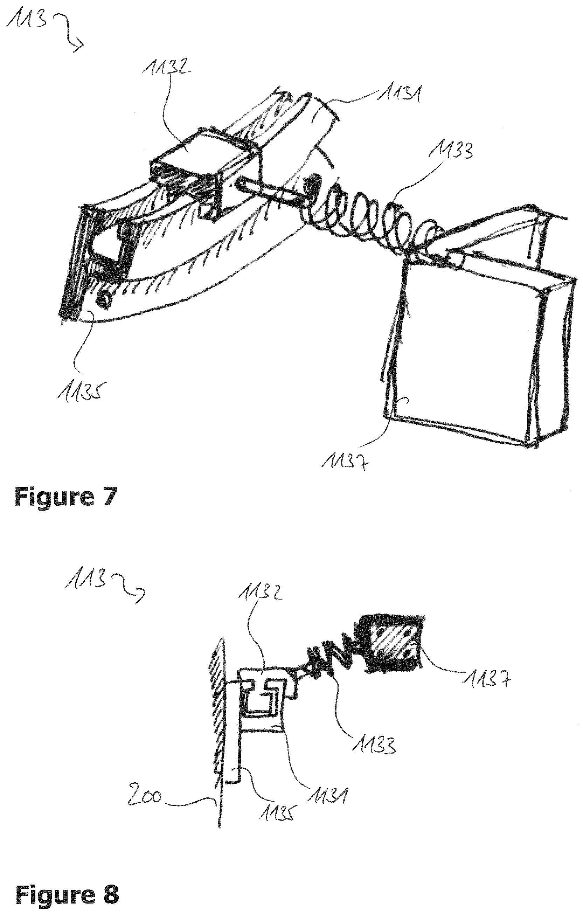

Figures 7 and 8 schematically illustrates a perspective view and a cross-sectional view of a schematic structure forming a lower mount 113. It is to be understood that the elements of the lower mount 113 in these drawings are given for schematic and explanatory reasons and may not reflect the actual implementation.

The lower mount 113 comprises a monument-fixated holder 1131, 1135, a spacer-fixated holder 1137, and coupling means configured to couple the two holders with one another. The coupling means are further configured to restrict a relative movement between the monument-fixated holder 1131, 1135 and the spacer-fixated holder 1137 in the longitudinal direction of the aircraft and to allow a relative movement in the transverse direction.

In the illustrated variant, the monument-fixated holder 1131 comprises a groove. In Figures 7 and 8 the opening of the groove is on the top side, which is only one example. The opening of the groove can likewise be on a lateral side or the bottom side of the holder 1131. The coupling means can comprise a sliding block 1132 configured to be inserted into the groove and further configured to slide along the groove. Thus, the spacer-fixated holder 1137 is capable of moving in the transverse direction, while a movement in the longitudinal direction is blocked.

Depending on the shape of the groove and sliding block 1132, a relative movement of the sliding block 1132 (and hence of the spacer-fixated holder 1137) in a vertical direction is also restricted. As a mere example and as illustrated in Figure 7, the opening of the groove is smaller (in the longitudinal direction) than the inner space of the groove. Likewise, the sliding block 1132 can have a wider head at its bottom attached to the remainder of the sliding block by a narrow middle section, so that the sliding block 1132 cannot be taken out of the groove through the groove opening (see Figure 8).

The groove of the monument-fixated holder 1131 or the entire monument-fixated holder 1131, 1135 can form a circular arch. This allows movement of the spacer 100 along such arc of the lower mount 113. As a mere example, a centre of the circular arc can be at the upper mount 111, for example, at a centre of the joint ball 1113. Thus, the spacer 100 is mounted to the monument 200, but can swing around the upper mount 111 guided by the groove in the lower mount 113. A gap between the spacer and the monument wall 200 can be kept constant due to the restriction of the relative movement in the longitudinal direction between spacer 100 and monument wall 200. In addition, in case of relative movements between the sidewall 220 and the monument 200, the spacer 100 can still cover a gap between the sidewall 220 and the monument 200.

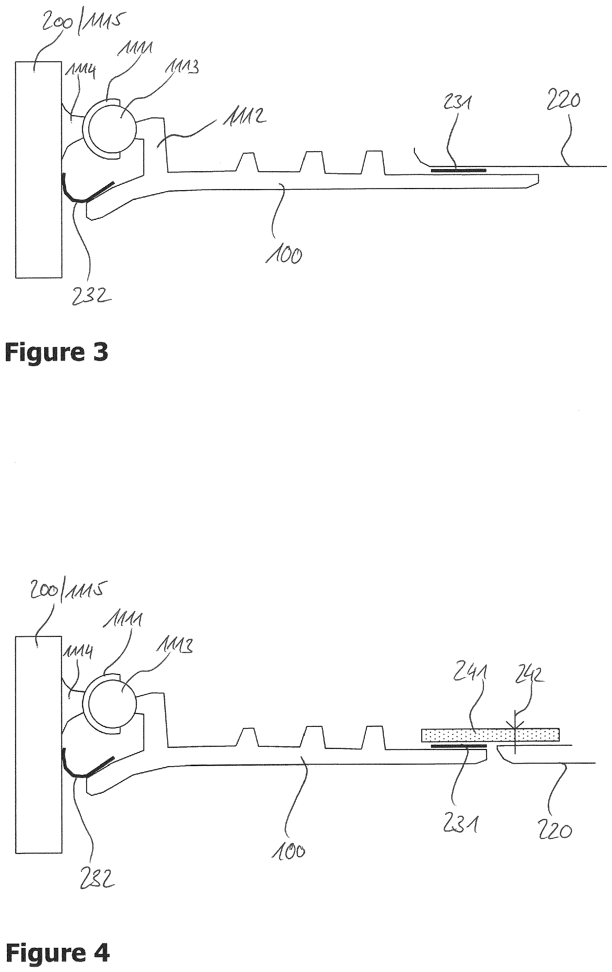

With reference to Figure 3 schematically illustrating a sectional view of a spacer 100 including upper mount 111, the relationship between monument 200, spacer 100 and sidewall 220 are explained in more detail. Specifically, the ball joint 1111, 1113 (consisting of joint ball 1113 and joint socket 1111) can be mounted to the monument wall 200. The bar or damper 1114 as well as the spacer-fixated holder 1112 sets a distance between the monument wall 200 and a side edge of the spacer 100 (a side edge to the left in Figure 3). The gap between the side edge of the spacer 100 and a surface of the monument wall 200 will be constant due to the restriction of the movement of the spacer 100 relative to the monument wall 200 in the longitudinal direction (left-right direction in Figure 3).

This is also noted in Figure 1 specifying the directions of movement that are preferably restricted by the respective holder 110. For instance, at the upper mount 111 the spacer 100 is restricted in its movement in the longitudinal direction (X), the transverse direction (Y), and the vertical direction (Z). Nevertheless, a rotational movement of the spacer 100 around the joint ball 1113 can be possible. The lower mount 113 restricts the movement of the spacer 100 in the longitudinal direction (X). A movement in the transverse direction (Y) may be possible, but could be dampened or significantly restricted as will be explained in more detail below, so that a movement restriction in the transverse direction is only specified in parentheses.

Referring back to Figure 3, a gap cover 232 can be provided between the side edge of the spacer 100 and the surface of the monument wall 200. As a mere example, the gap cover 232 can be fixed/attached to the spacer 100 close to the side edge.

For instance, the gap cover 232 can be of an elastic material, such as an elastomer or rubber.

Since the spacer 100 is mounted to the monument 200, the installation of the spacer 100 can be independent from the installation of the sidewall 220 in the aircraft as well as from the location of a side edge of the sidewall 220. As can be derived from the schematic drawing of Figure 3, the gap between a side edge of the sidewall 220 and a surface of the monument wall 200 can be rather wide and is covered by the spacer 100. For instance, the sidewall 220 may be unaltered and regularly ends at the position illustrated in Figure 3. While in conventional installations, another sidewall would be installed and cut with respect to the position of the monument wall 200, the solution of the present disclosure simplifies such installation.

The monument-mounted spacer 100 can be provided any time before or after installation of the monument 200 in the aircraft and can have a size sufficient to cover the gap between the monument 200 and the sidewall 220. As a mere example, the spacer 100 can be dimensioned to overlap a side region or at least the side edge of the sidewall 220. Since a relative movement between the monument 200 and the sidewall 220 is possible, and since the spacer 100 is mounted to the monument 200, a relative movement between the free end of the spacer 100 and the side region of the sidewall 220 will occur. In the overlapping region, a gliding component 231 may be arranged. For instance, the gliding component 231 can be provided on a surface of the spacer 100 facing a surface of the sidewall 220. Such gliding component 231, which may be made from or include PTFE, protects the sidewall 220 and facilitates the relative movement between the spacer 100 and the sidewall 220. Moreover, the gliding component 231 may also be elastic in the transverse direction, such as a cushion, in order to close the overlapping space between the spacer 100 and the sidewall 220.

Figure 4 schematically illustrates a sectional view of a spacer 100 including other mounts. Some components are the same as those illustrated in Figure 3 and are provided with the same reference numerals. The description of the same components is omitted for sake of brevity.

Instead of overlapping the sidewall 220, the spacer 100 can be dimensioned to have a side edge in front of the side edge of the sidewall 220. Thus, the interior surfaces of the spacer 100 and the sidewall 220 are flush. In order to avoid an open gap between spacer 100 and sidewall 220, an interface component 241 can be mounted to the back side (exterior facing side) of the sidewall 220. The spacer 100 can then be configured to overlap with this interface component 241, and a gliding component 231 may be provided either on the spacer 100 or the interface component 241.

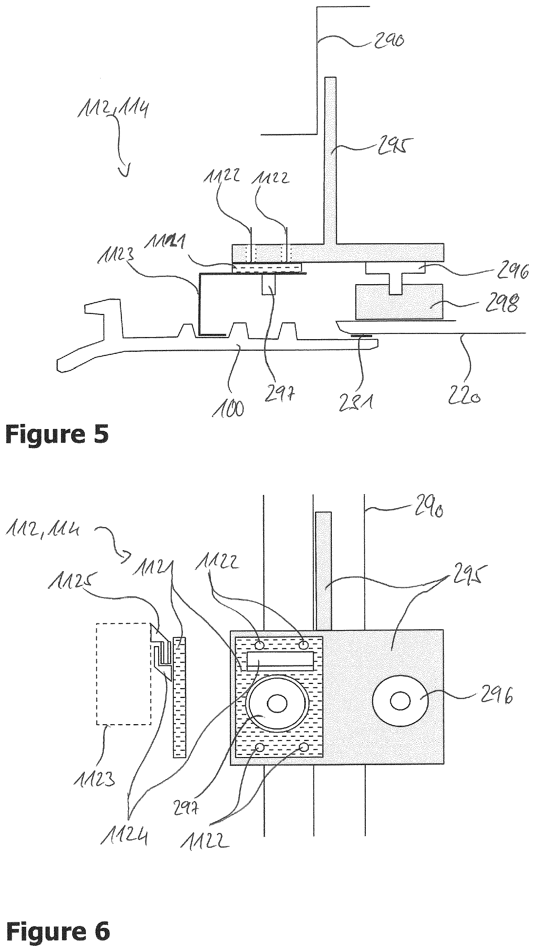

Figures 5 and 6 schematically illustrate a sectional view of a spacer 100 including an additional mount, and front and side views of the additional mount, respectively.

For instance, the additional mount can be a side mount 112, 114 (Figure 1) configured to be mounted to a frame bracket 295 and to hold the spacer 100 at a position spaced apart from the monument wall 200 (a position closer to the sidewall 220 than the monument 200). For instance, in case the size of the spacer 100 in the longitudinal direction increases, for example, due to a side edge of a sidewall 220 being located further away from the monument wall 200, a spacer 100 solely mounted by the upper and lower mounts 111, 113 may not be securely held the monument. Likewise, the spacer 100 may perform larger relative movement to the sidewall 220 due to the long lever arm one by such large spacer 100. Thus, an additional side mount 112, 114 facilitates a stable fixation of the spacer 100.

The frame bracket 295 can be a regular bracket mounted to a frame 290 of the aircraft, which is regularly used to mount other interior components, such as the sidewall 220. For instance, a shock mount 296 (a mount including a shock absorber or damper) can be provided on an interior side of the frame bracket 295. An intermediate element 298 can also be provided, for example, to adjust a distance between the outer side of the sidewall 220 and the frame bracket 295 (e.g., due to manufacturing tolerances or the like). As illustrated in Figures 5 and 6, a pair of such shock mounts may be provided, for example, to install two adjacent sidewall 220 along the longitudinal direction of the aircraft.

Instead of a second sidewall 220, the associated side of the frame bracket 295 can be employed as a side mount 112, 114 for the spacer 100. While the shock mount 297 on this side of the frame bracket 295 could be used to mount the spacer 100, additionally or alternatively, the side mount 112, 114 can comprise a base plate 1121 configured to be mounted to the frame bracket 295. The base plate 1121 can be mounted to the frame bracket 295, either employing the shock mount 297 or by fasteners 1122.

In addition, the side mount 112, 114 can further comprise a first hook 1124 provided on the base plate 1121, and a second hook 1125 coupled to the spacer 100. The first and second hooks 1124, 1125 can be hooked into one another, for example by hanging the second hook 1125 into the first hook 1124 from above the first hook 1124.

The first and second hooks 1124, 1125 can be arranged in a longitudinal direction of the aircraft, which provides a freedom of movement of the spacer 100 at the side mount 112, 114 in the longitudinal direction (Y).

The spacer 100 can be coupled to the second hook 1125 is directly or via an intermediate element 1123. Such intermediate element 1123 may be employed, in order to adjust a distance between the spacer 100 and the front face of the frame bracket 295. Thus, different intermediate elements 1123 or an adjustable intermediate element 1123 can be provided. This further allows bringing the spacer 100 in front of the sidewall 220, in order to overlap the same and as illustrated in Figure 5. Alternatively, the spacer 100 could also be arranged next to the side edge of the sidewall 220 to have a flush surface with the sidewall 220 (as in Figure 4, but without the interface component 241).

A non-illustrated example may include a structure in intermediate element 1123 allowing a dedicated freedom of movement in the transverse direction (up-down direction in Figure 5). As a mere example, such freedom of movement can be achieved by a similar hook arrangement as first and second hooks 1124, 1125 arranged in the transverse direction.

Returning to the lower mount 113 of Figures 7 and 8, the coupling means of the lower mount 113 can comprise a first damper 1133 configured to absorb vibrations of the spacer 100 in the longitudinal direction and/or in the transverse direction. Figures 7 and 8 schematically illustrate such first damper 1133 as a spring. It is to be understood that the first damper 1133 can be implemented in a different manner, such as an elastic material (e.g., an elastomer or rubber). It is further to be understood that the first damper 1133 may damp vibrations and thereby allow a certain degree of freedom of movement. This, however, is a much smaller movement than compared to the movement of the sliding block 1132 in the groove of the monument-fixated holder 1131.

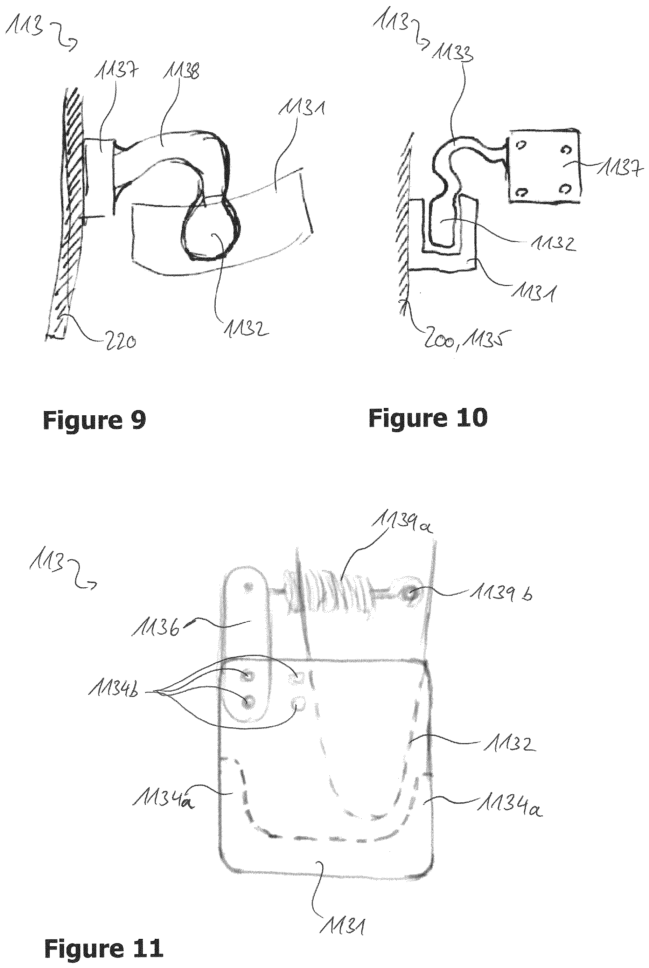

Figures 9 and 10 schematically illustrate a view of a lower mount 113 in a longitudinal direction and in a transverse direction, respectively. Here, instead of a schematic spring the coupling means is illustrated as a bent holding structure. Due to the bent shape a first damper 1133 can be implemented vibrations in the longitudinal direction (cf. Figure 10). Likewise, the holding structure can also be bent in the transverse direction (cf. Figure 10), so that the coupling means comprise a second damper 1138 configured to absorb vibrations of the spacer 100 in the transverse direction.

Figure 11 schematically illustrates a front view of another exemplary implementation of a lower mount 113. Specifically, the groove of the monument-fixated holder 1131 comprises an end stop 1134a at each and of the groove that is configured to stop a movement of the sliding block 1132 along the groove. This prevents the sliding block 1132 from disengaging the groove, i.e. from disengaging the monument-fixated holder 1131. Thus, the spacer 100 may not become loose at the lower end.

A further exemplary in detail of the lower mount 113 is also illustrated in Figure 11. Specifically, the sliding block 1132 can be limited in its freedom of movement in the transverse direction. This can be achieved by a plurality of fixations 1134b at the lower mount 113, such as the monument-fixated holder 1131 or a base plate 1135 of the lower mount 113 (Figures 7 and 8). An adjustment plate 1136 may include recesses or openings to receive some of the fixations 1134b. As a mere example, the plurality of fixations 1134b can be arranged along the transverse direction, such as at predetermined intervals. The adjustment plate 1136 can then be arranged at these predetermined intervals. This provides for the first limitation on the location of the sliding block 1132 in the groove.

A biasing element 1139a can be coupled to a fixation of the coupling means of the lower mount 113, particularly a fixation 1139b at the sliding block 1132. The biasing element 1139a provides a second limitation to the sliding block 1132, particularly a limitation to the movement in the groove due to the biasing force acting on the sliding block 1132.

Thus, the example of Figure 11 still provides a freedom of movement in the transverse direction for the spacer 100. However, the spacer can be secured at the lower mount 113, and particularly can be protected from being disengaged or detached from the lower mount 113. As a mere example, a passenger may pull at a lower edge of the spacer 100. Without the end stop 1134a and/or without the adjustment plate 1136, fixations 1134b and biasing element 1139a, the passenger may detach the spacer 100 from the lower mount 113.

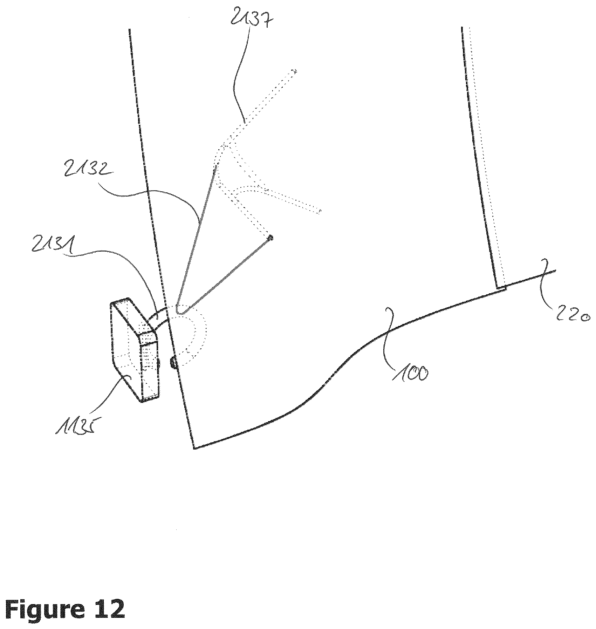

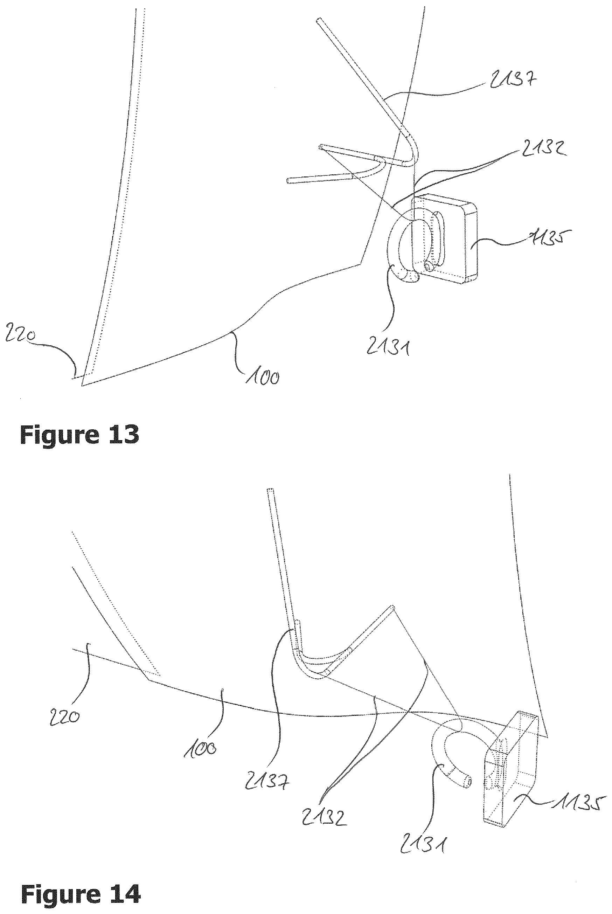

Figures 12 to 14 schematically illustrate different perspective views of yet another lower mount 113. Elements of same function as in the embodiments described above are provided with the same reference numerals, and their description will be omitted for sake of brevity.

The monument-fixated holder comprises a hook 2131, and the spacer-fixated a holder comprises a pyramidal component 2137. The coupling means of the lower mount 113 comprises a loop 2132 coupled to the pyramidal component 2137. The loop 2132 is configured to be hooked into the hook 2131. This allows a very easy and fast installation of the spacer 100, since only the loop 2132 has to be hooked into a monument-fixated component 2131.

The loop 2132 allows a freedom of movement of the spacer 100 relative to the monument wall 200 at least in the longitudinal and transverse directions. For instance, by mounting the spacer 100 via upper mount 111 and (upper) side mount 112, the spacer 100 is relatively fixed in the longitudinal direction (X), also at the lower mount 113. Thus, hooking the loop 2132 into the hook 2131 in such a manner that the loop 2131 is under tension (particularly in the longitudinal direction and at least partially in the transverse direction and/or vertical direction) allows fixation of the spacer 100 in the longitudinal direction while, at the same time, providing a dampening of vibrations of the spacer 100 relative to the monument wall 200.

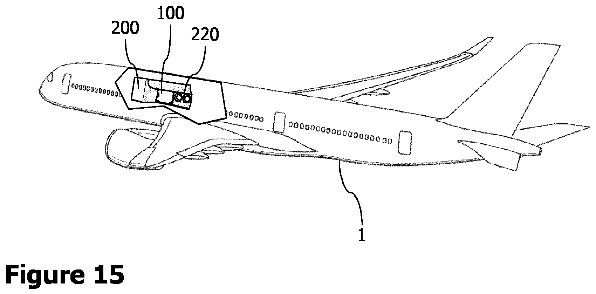

Figure 15 schematically illustrates an aircraft 1 comprising a spacer 100 between a monument 200 and a sidewall 220.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A spacer (100) for covering a gap between a sidewall (220) arranged in a longitudinal direction and a monument wall (200) arranged in a transverse direction in an aircraft (1), the spacer comprising:
an upper mount (111); and
a lower mount (113),
**characterised in that**
the lower mount (113) comprises a monument-fixated holder (1131, 2131), a spacer-fixated holder (1137, 2137), and coupling means configured to couple the monument-fixated holder and the spacer-fixated holder, to restrict a relative movement between the monument-fixated holder and the spacer-fixated holder in the longitudinal direction, and to allow a relative movement in the transverse direction.

2. The spacer (100) of claim 1, wherein the monument-fixated holder (1131) comprises a groove, and wherein the coupling means comprise a sliding block (1132) configured to be inserted into and slide along the groove, and
wherein, preferably, at least the groove forms a circular arc having a centre at the upper mount (111).

3. The spacer (100) of claim 2, wherein the groove comprises an end stop (1134a) at each end of the groove that is configured to stop a movement of the sliding block (1132) along the groove.

4. The spacer (100) of one of claims 1 to 3, wherein the coupling means comprise a first damper (1133) configured to absorb vibrations of the spacer (100) in the longitudinal direction, and/or
wherein the coupling means comprise a second damper (1138) configured to absorb vibrations of the spacer (100) in the transverse direction.

5. The spacer (100) of one of claims 1 to 3, wherein the coupling means comprise a damping component (1133, 1138, 2132) configured to absorb vibrations of the spacer (100) in the longitudinal direction and the transverse direction, wherein preferably the damping component is an elastic component (1133, 2132).

6. The spacer (100) of one of claims 1 to 5, wherein the lower mount (113) further comprises a plurality of fixations (1134b) spaced apart in the transverse direction, an adjustment plate (1136) configured to be mounted to one or a subset of the plurality of fixations (1134b), and a biasing element (1139a) coupled to a fixation (1139b) of the coupling means (1132).

7. The spacer (100) of claim 1, wherein the monument-fixated holder comprises a hook (2131), the spacer-fixated holder comprises a pyramidal component (2137), and the coupling means comprise a loop (2132) coupled to the pyramidal component (2137) and configured to be hooked into the hook (2131).

8. The spacer (100) of one of claims 1 to 7, further comprising:
a gliding component (231) arranged on a surface of the spacer (100) facing a surface of the sidewall (220).

9. The spacer (100) of one of claims 1 to 8, further comprising:
a side mount (112, 114) configured to be mounted to a frame bracket (295) and hold the spacer (100) at a position spaced apart from the monument wall (200).

10. The spacer (100) of claim 9, wherein the side mount comprises a base plate (1121) configured to be mounted to the frame bracket (295), a first hook (1124) provided on the base plate (1121), and a second hook (1125) coupled to the spacer (100) and configured to be hooked into the first hook (1124).

11. An aircraft (1) comprising:
a sidewall (220);
a monument having a monument wall (200) arranged substantially perpendicular to the sidewall (220), wherein a side edge of the sidewall (220) is spaced apart from a surface of the monument wall (200) facing the sidewall; and
a spacer (100) according to one of claims 1 to 10, and covering a gap between the monument wall (200) and the side edge of the sidewall (220).

## Patentansprüche

1. Abstandshalter (100) zum Abdecken eines Spalts zwischen einer Seitenwand (220), die in einer Längsrichtung angeordnet ist, und einer Monumentwand (200), die in einer Querrichtung in einem Luftfahrzeug (1) angeordnet ist, wobei der Abstandshalter Folgendes umfasst:
eine obere Halterung (111); und
eine untere Halterung (113),
**dadurch gekennzeichnet, dass**
die untere Halterung (113) einen am Monument fixierten Halter (1131, 2131), einen am Abstandshalter fixierten Halter (1137, 2137) und Kopplungsmittel umfasst, die dazu ausgelegt sind, den am Monument fixierten Halter und den am Abstandshalter fixierten Halter zu koppeln, eine Relativbewegung zwischen dem am Monument fixierten Halter und dem am Abstandshalter fixierten Halter in Längsrichtung zu beschränken und eine Relativbewegung in Querrichtung zu ermöglichen.

2. Abstandshalter (100) nach Anspruch 1, wobei der am Monument fixierte Halter (1131) eine Nut umfasst und wobei die Kopplungsmittel einen Gleitblock (1132) umfassen, der dazu ausgelegt ist, in die Nut eingeführt zu werden und entlang dieser zu gleiten, und
wobei vorzugsweise zumindest die Nut einen Kreisbogen mit einer Mitte an der oberen Halterung (111) bildet.

3. Abstandshalter (100) nach Anspruch 2, wobei die Nut einen Endanschlag (1134a) an jedem Ende der Nut umfasst, der dazu ausgelegt ist, eine Bewegung des Gleitblocks (1132) entlang der Nut zu stoppen.

4. Abstandshalter (100) nach einem der Ansprüche 1 bis 3, wobei die Kopplungsmittel einen ersten Dämpfer (1133) umfassen, der dazu ausgelegt ist, Vibrationen des Abstandshalters (100) in der Längsrichtung zu absorbieren, und/oder wobei die Kopplungsmittel einen zweiten Dämpfer (1138) umfassen, der dazu ausgelegt ist, Vibrationen des Abstandshalters (100) in der Querrichtung zu absorbieren.

5. Abstandshalter (100) nach einem der Ansprüche 1 bis 3, wobei die Kopplungsmittel eine Dämpfungskomponente (1133, 1138, 2132) umfassen, die dazu ausgelegt ist, Vibrationen des Abstandshalters (100) in der Längsrichtung und der Querrichtung zu absorbieren, wobei vorzugsweise die Dämpfungskomponente eine elastische Komponente (1133, 2132) ist.

6. Abstandshalter (100) nach einem der Ansprüche 1 bis 5, wobei die untere Halterung (113) ferner mehrere Befestigungen (1134b), die in der Querrichtung beabstandet sind, eine Einstellplatte (1136), die dazu ausgelegt ist, an einer oder einer Teilmenge der mehreren Befestigungen (1134b) montiert zu werden, und ein Vorspannelement (1139a), das mit einer Befestigung (1139b) des Kopplungsmittels (1132) gekoppelt ist, umfasst.

7. Abstandshalter (100) nach Anspruch 1, wobei der am Monument fixierte Halter einen Haken (2131) umfasst, der am Abstandshalter fixierte Halter eine pyramidenförmige Komponente (2137) umfasst und die Kopplungsmittel eine Schlaufe (2132) umfassen, die mit der pyramidenförmigen Komponente (2137) gekoppelt ist und dazu ausgelegt ist, in den Haken (2131) eingehängt zu werden.

8. Abstandshalter (100) nach einem der Ansprüche 1 bis 7, der ferner Folgendes umfasst:
eine Gleitkomponente (231), die auf einer Oberfläche des Abstandshalters (100) angeordnet ist, die einer Oberfläche der Seitenwand (220) zugewandt ist.

9. Abstandshalter (100) nach einem der Ansprüche 1 bis 8, der ferner Folgendes umfasst:
eine seitliche Halterung (112, 114), die dazu ausgelegt ist, an einer Rahmenhalterung (295) montiert zu werden und den Abstandshalter (100) an einer Position zu halten, die von der Monumentwand (200) beabstandet ist.

10. Abstandshalter (100) nach Anspruch 9, wobei die seitliche Halterung eine Basisplatte (1121), die dazu ausgelegt ist, an der Rahmenhalterung (295) montiert zu werden, einen ersten Haken (1124), der an der Basisplatte (1121) bereitgestellt ist, und einen zweiten Haken (1125), der mit dem Abstandshalter (100) gekoppelt ist und dazu ausgelegt ist, in den ersten Haken (1124) eingehakt zu werden, umfasst.

11. Flugzeug (1), das Folgendes umfasst:
eine Seitenwand (220);
ein Monument mit einer Monumentwand (200), die im Wesentlichen senkrecht zu der Seitenwand (220) angeordnet ist, wobei eine Seitenkante der Seitenwand (220) von einer Oberfläche der Monumentwand (200), die der Seitenwand zugewandt ist, beabstandet ist; und
Abstandshalter (100) nach einem der Ansprüche 1 bis 10, der einen Spalt zwischen der Monumentwand (200) und der Seitenkante der Seitenwand (220) abdeckt.

## Revendications

1. Entretoise (100) destinée à recouvrir un interstice entre une paroi latérale (220) disposée dans une direction longitudinale et une paroi de module (200) disposée dans une direction transversale dans un aéronef (1), l'entretoise comprenant :
un support de montage supérieur (111) ; et
un support de montage inférieur (113),
**caractérisée en ce que**
le support de montage inférieur (113) comprend un support fixé au module (1131, 2131), un support fixé à l'entretoise (1137, 2137), et des moyens de couplage conçus pour coupler le support fixé au module et le support fixé à l'entretoise, afin de limiter un mouvement relatif entre le support fixé au module et le support fixé à l'entretoise dans la direction longitudinale, et de permettre un mouvement relatif dans la direction transversale.

2. Entretoise (100) de la revendication 1, dans laquelle le support fixé au module (1131) comprend une rainure, et dans laquelle les moyens de couplage comprennent un bloc coulissant (1132) conçu pour être inséré dans la rainure et coulisser le long de la rainure, et
de préférence dans laquelle au moins la rainure forme un arc de cercle présentant un centre au niveau du support de montage supérieur (111).

3. Entretoise (100) de la revendication 2, dans laquelle la rainure comprend une butée d'extrémité (1134a) à chaque extrémité de la rainure qui est conçue pour arrêter un mouvement du bloc coulissant (1132) le long de la rainure.

4. Entretoise (100) d'une des revendications 1 à 3, dans laquelle les moyens de couplage comprennent un premier amortisseur (1133) conçu pour absorber des vibrations de l'entretoise (100) dans la direction longitudinale, et/ou
dans laquelle les moyens de couplage comprennent un deuxième amortisseur (1138) conçu pour absorber des vibrations de l'entretoise (100) dans la direction transversale.

5. Entretoise (100) d'une des revendications 1 à 3, dans laquelle les moyens de couplage comprennent un composant d'amortissement (1133, 1138, 2132) conçu pour absorber des vibrations de l'entretoise (100) dans la direction longitudinale et dans la direction transversale, de préférence dans laquelle le composant d'amortissement est un composant élastique (1133, 2132).

6. Entretoise (100) d'une des revendications 1 à 5, dans laquelle le support de montage inférieur (113) comprend en outre une pluralité de fixations (1134b) espacées dans la direction transversale, une plaque de réglage (1136) conçue pour être montée sur une fixation ou un sous-ensemble de fixations de la pluralité de fixations (1134b), et un élément de rappel (1139a) couplé à une fixation (1139b) des moyens de couplage (1132).

7. Entretoise (100) de la revendication 1, dans laquelle le support fixé au module comprend un crochet (2131), le support fixé à l'entretoise comprend un composant pyramidal (2137), et les moyens de couplage comprennent une boucle (2132) couplée au composant pyramidal (2137) et conçue pour être accrochée à l'intérieur du crochet (2131).

8. Entretoise (100) d'une des revendications 1 à 7, comprenant en outre :
un composant coulissant (231) disposé sur une surface de l'entretoise (100) en face d'une surface de la paroi latérale (220).

9. Entretoise (100) d'une des revendications 1 à 8, comprenant en outre :
un support de montage latéral (112, 114) conçu pour être monté sur un support de cadre (295) et maintenir l'entretoise (100) à une position espacée de la paroi de module (200).

10. Entretoise (100) de la revendication 9, dans laquelle le support de montage latéral comprend une plaque de base (1121) conçue pour être montée sur le support de cadre (295), un premier crochet (1124) disposé sur la plaque de base (1121), et un deuxième crochet (1125) couplé à l'entretoise (100) et conçu pour être accroché à l'intérieur du premier crochet (1124).

11. Aéronef (1) comprenant :
une paroi latérale (220) ;
un module ayant une paroi de module (200) disposée de façon sensiblement perpendiculaire à la paroi latérale (220), un bord latéral de la paroi latérale (220) étant espacé d'une surface de la paroi de module (200) faisant face à la paroi latérale ; et
une entretoise (100) selon une des revendications 1 à 10, et recouvrant un interstice entre la paroi de module (200) et le bord latéral de la paroi latérale (220).
